Europäisches Patentamt

European Patent Office

Office européen des brevets

(11) Publication number: **0 340 194**
**A1**

## EUROPEAN PATENT APPLICATION

(21) Application number: **89850135.8**

(22) Date of filing: **26.04.89**

(51) Int. Cl.⁴: **F 16 L 37/12**

(30) Priority: **29.04.88 SE 8801634**

(43) Date of publication of application:
**02.11.89 Bulletin 89/44**

(84) Designated Contracting States:
**BE DE FR GB IT NL**

(71) Applicant: **Diamant Boart Craelius Aktiebolag**
**S-195 82 Märsta (SE)**

(72) Inventor: **Jonsson, Gunnar**
**Rösvägen 50**
**S-183 46 Täby (SE)**

(74) Representative: **Westerlund, Christer et al**
**L.A. Groth & Co Patentbyra AB Västmannagatan43**
**S-113 25 Stockholm (SE)**

(54) **Hose or pipe coupling.**

(57) A hose or pipe coupling comprising first and second coupling members (2, 4) sealing against one another when the coupling is connected and being retained in this position by a locking device (32). The locking device comprises at least two arms (34) which are swingable at the first coupling member (4) and which engage with the second coupling means (4), the arms being provided with axially extending guide surfaces (44), and further comprises locking means (36, 38) which can be acted upon for detachably maintaining said engagement, the locking means being slidable along the guide surfaces of the arms between a first position, in which it will act on the arms in order for them to engage with the second coupling member, and a second position, in which it will act on the arms in order for them to take a swinging position out of engagement with the second coupling member, so that this can be parted from the first coupling member.

Fig. 1

# Description

## HOSE OR PIPE COUPLING

### Technical field

The present invention relates to a hose or pipe coupling of the kind described in the preamble of claim 1, specially intended for hydraulic high pressure fluids.

### Prior Art

The most common couplings for hydraulic high pressure fluids comprise a swivelling nut on one of the coupling members and a threaded bushing on the other. There are some disadvantages associated with couplings of this kind. A major disadvantage is that space is required for turning the nut using a wrench. Another big disadvantage is that the coupling might get damaged if handled by an untrained operator. Typical examples are that the nut could get tightened too hard so that the threads are damaged or too loosely so that sealing will be inadequate, or that it could be screwed on obliquely. Yet another disadvantage is that the coupling members cannot be turned relatively to one another when connected. Thus, a hose has to be mounted, by means of which they can absorb the torque which may arise between them when they are connected. Finally, a considerable amount of time is required for screwing together and unscrewing the coupling members, and this amount will increase further if there is only limited space for using a wrench or other tightening tool.

With another type of coupling, known as quick coupling, many of these disadvantages are avoided. This coupling comprises two parts connected by means of steel balls bridging the distance between them. Connection and disconnection of the two parts is fairly simple. However, the quick couplings have a number of disadvantages. Firstly, owing to its complexity, a coupling of this kind is very expensive. Secondly, it has been found to be easily affected by dirt, so that the movement of the steel balls and the surrounding sleeves is inhibited. Thirdly, the coupling does not always work satisfactorily when used in hydraulic high pressure systems, especially systems where high pressure shocks arise. The reason for this is that the load carrying area of the locking system is very small. For these reasons the quick coupling is less used than the first-mentioned coupling.

A third type of coupling is the one known as clamp coupling. A coupling of this kind is described in British patent specifications 1 066 936 and 1 253 981. However, this coupling, too, has disadvantages. It is usually big and heavy and the clamp can only be inserted from few directions (usually only four). Since grooves on the inside have to be cut in the female portions, the cost of manufacturing is considerable. However, the most serious thing is that the area of the load carrying pin is fairly small, so that a heavy sudden loading deformations might arise which will result in incorrect functioning.

Yet another type of coupling is disclosed in the Swedish patent application as published for opposition, No. 406 363 (7 404 237-5). With this coupling several of the disadvantages of the above couplings are avoided. However, remaining disadvantages are that a tool must be used to disconnect the clamp from the male and female portions, that the clamp is removable from the coupling, meaning that it could get lost, that manufacture of the clamp is rather complicated, and that the load carrying surfaces of the clamp are not large enough.

The coupling disclosed in the German Offenlegungsschrift 3 100 015 presents more or less the same advantages and disadvantages as the coupling described in the preceding paragraph, however, with the difference that no tool is needed to disconnect the clamp.

### Description of the Invention

The problem to be solved by the present invention is to avoid the above-mentioned disadvantages of the hose or pipe couplings known in the art and to provide a coupling which can be manufactured out of easy-to-work material and without using sophisticated machinery, is able to carry great axial loads without being deformed, has no loose parts that can get lost, consists of fairly few, uncomplicated parts and, finally, which can be opened and locked in one simple operation without using tools.

This problem is solved by providing the coupling according to the invention with the features stated in the characterizing portions of the claims.

### Description of the figures

Figure 1 shows a longitudinal section of a first embodiment of a coupling according to the invention, in which the top part of the figure shows the coupling in closed condition and the bottom part shows the coupling in opened condition.

Figure 2 is a cross-sectional view of the coupling of Figure 1 taken along the line II-II of Figure 1.

Figure 3 shows a longitudinal section of a second embodiment of a coupling according to the present invention, in which the bottom part of the figure shows the coupling in closed condition and the bottom par shows the coupling in opened condition, and

Figure 4 is a cross-sectional view of the coupling shown in Figure 3 taken along the line IV-IV of Figure 3.

### Preferred Embodiments

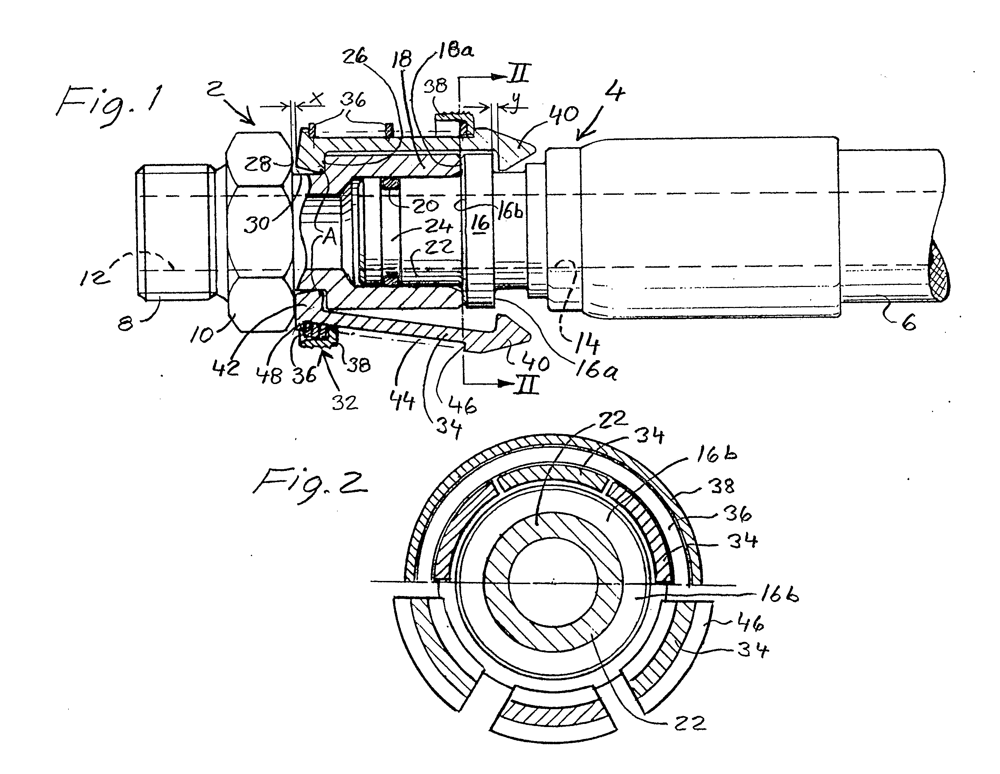

The coupling shown in Figures 1 and 2 comprises a first coupling member in the form of a female portion 2 and a second coupling member in the form of a male portion 4 fitting into the female portion. The male portion 4 comprises a hose nipple (not shown) by means of which it is connected to a reinforced hose 6. The female portion 2 has a screw thread 8 to that by means of a hexagon-headed nut 10 it can be screwed into a threaded bore in a casing or the like. It is, of course, possible to shift the connections, or both coupling members can have hose or thread connection or some other kind of connection device.

The female and male portions 2, 4 present through holes 12, 14 of the same diameter. The male portion 4 has a flange 16 with an annular radial shouldered surface 16a and an annular radial surface 16b which, when the coupling is in the closed position, bears against or is proximate to an annular radial end face 18a of a sleeve-shaped part 18 of the female portion 2. An O-ring 20 is inserted in a groove 24 made in the sleeve-shaped part 22 of the male portion 4. Radial, annular surfaces 26, 28 on the female portion 2 define a space 30 between them.

The coupling further comprises a locking device 32 consisting of arms 34 and locking means in the form of a helical spring 36 and a rigid ring 38. The number of arms 34 can vary from two onwards, however, in order to achieve as large load carrying surfaces as possible and to facilitate the swinging motion of the arms, it has turned out to be suitable to mount four to eight arms, which essentially cover the entire circumference of the coupling and can be said to form parts of a slotted sleeve surrounding the coupling members. In the illustrated embodiment there are six identical arms.

Each arm 34 presents a first part or end 40 for engagement with the surface 16a of the flange 17, and a second part or end 42 inserted in the space 30. The axial width of the part 42 is somewhat smaller than that of the space 38 so that when the surfaces 16b and 18a bear against one another there is a play x, which is smaller than the play y between the radial surface of the part 40 and the surface 16a of the flange 16.

Further, each arm 34 has a guide surface 44 defined by two shoulders 46, 48. The first shoulder 46 is located near the part of the arm engaging with the surface 16a. The point A, round which the arm 34 is swingable in the space 30, is axially disposed between the shoulders 46 and 48, but can also be located mainly radially in line with the second shoulder 48 or even somewhat to the left of this, when, however, the swinging movement of the arm is hindered.

The helical spring 36, which is a compression spring and which, owing to its flexibility, it has been possible to slip over one of the shoulders 46, 48 by increasing its diameter, in order for it to get into the position shown in Figure 1, has a rectangular cross section, the two longer parallel sides of which are disposed radially in order to increase the radial strength of the spring.

The ring 38, the inner diameter of which is smaller than the largest diameter of the shoulders 46, 48 but larger than the diameter of the guide surfaces 44, has been slipped on to the arms 34 in a flat condition and has then been upset so as to present the L-shape illustrated.

The helical spring 36 suitably presses against the ring 38 and the shoulder 48 to keep the ring in its right-hand end position as shown at the top of Figure 1. The helical spring 36 can, however, be shorter, so that there will be a play between said spring, the shoulder 48 and/or the ring 38. Further, it is possible to use either only the spring 36 or only the ring 38 as locking means, the ring, if used alone, having to be held in its right-hand end position as shown at the top of Figure 1, by some suitable means other than the spring.

When the coupling is connected, the o-ring 20 will seal between the sleeve-shaped parts 18, 22 of the female and male portions 2, 4, even if there is a gap between the surfaces 16b and 18a. The hook-shaped ends 40 of the arms 34 prevent the female and male portions 2, 4 from parting, and the arms are prevented by the ring 38 and the spring 36 from swinging radially outwards.

For opening the coupling, the male and female portions 2, 4 are to be pressed towards one another and the ring 38 is to be grasped by the fingers of one hand and moved towards the left-hand side of Figure 1 towards the western position shown at the bottom of the figure, against the action of the force of the spring 36. During this movement, the parts 42 of the arms will first be displaced in such a way as to bear against the surface 28. When the ring 38 has been moved so far to the left that it no longer stops the arms 34 from swinging round the swinging points A, and the ring is pressed against the shoulder 48 by way of the spring 36, the arms will simultaneously swing round the aforementioned points A. Since the play x is less than the play y, it is guaranteed that the parts 40 of the arms 44 are not in frictional engagement with the surface 16a during the swinging movement of the arms. If there were such engagement, the swinging movement would be hindered. If there is pressure inside the coupling, the female or male portions 2, 4 cannot be pressed towards one another, which is a guarantee that the coupling cannot be opened.

When the arms 34 have been acted upon to take the position shown at the bottom of Figure 1, the male portion 4 is easily pulled out of the female portion 2.

When the male portion 4 is to be reinserted in the female portion 2, the arms 34 are acted upon to take their positions as shown at the bottom of Figure 1, and insertion can then take place without hindrance.

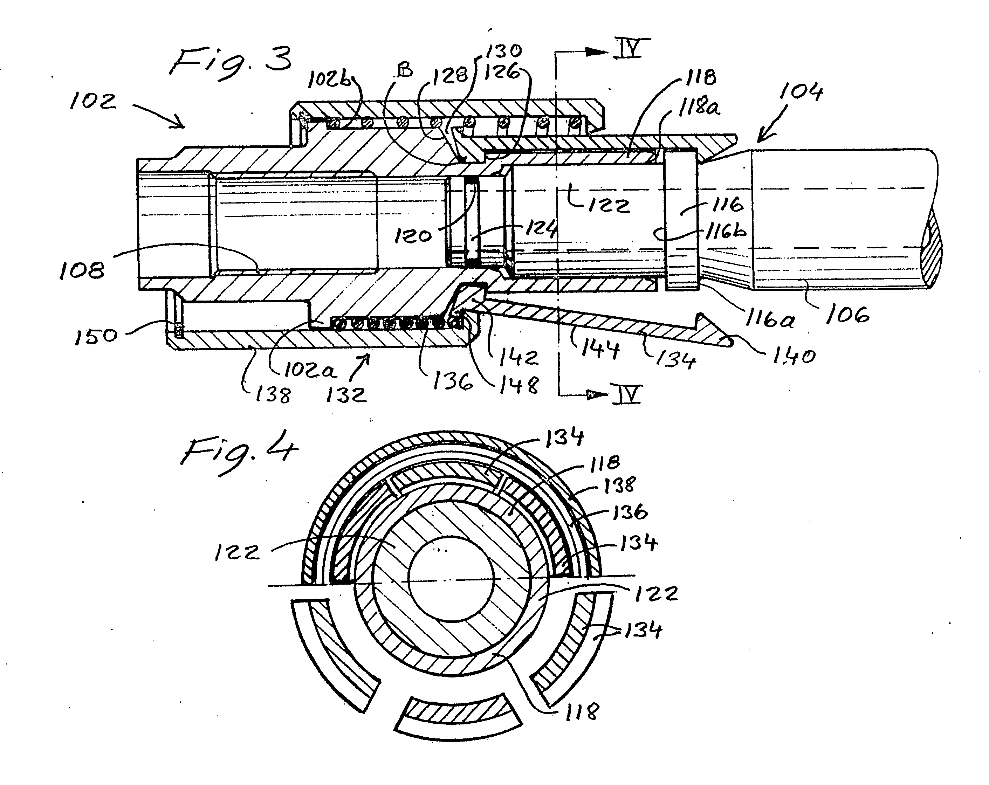

The coupling as shown in Figures 3 and 4 essentially corresponds to the one shown in Figures 1 and 2, wherefore the first-mentioned coupling will be described below less in detail than the latter coupling.

The coupling depicted in Figure 3 and 4 comprises a first coupling member in the form of a female portion 102 and a second coupling member in the form of a male portion 104 fitting into the former. The male portion 104 is connected to a pipe 106, such as a drilling pipe. The female portion 102 has a screw thread 108 for connection to, for example, a water swivel on a rock drilling machine.

The male and female portions 102, 104 are provided with through holes and comprise the following details with which they cooperate: 116, 116a, 116b, 118, 118a, 120, 122, 124, 126, 128, 130, 132, 134, 136, 138, 140, 142, 144, 148 which details correspond to the details of the same Nos -100 as shown in Figures 1 and 2. In figure 3, the play x indicated in Figure 1 is slightly larger than 0 since the axial width of the part 142 is slightly less than the axial width of the space 138. In figure 3, no play corresponding to the play y of Figure 1 is indicated, since in Figure 3 the male and female portions 104, 102 have been moved as far apart as possible. When, however, the male portion is inserted as far as possible into the female portion, the surfaces 116b and 118a then bearing against one another, there will be a play corresponding to the play y of Figure 1 between the radial surface of the part 140 and the surface 116a of the flange 116.

The shoulder 46 depicted in Figure 1 is not found in Figure 3. Instead, the female portion 102 has a shoulder 102a. The point B, around which each arm 134 is swingable within the space 130, is located mainly radially inside the shoulder 148. The helical spring 136 corresponds to the spring 36 of Figure 1, but does not have a rectangular cross section. Apart from extending over the arms 134, it also extends over the female portion 102 and bears against a guide surface 102b of the female portion. In the same way, the ring 138 corresponds to the ring 38 but extends both over the arms 134 and the guide surface 102b of the female portion as well as over the shoulder 102a. The movement of the ring in the right-hand direction in Figure 3 is restricted by a lock ring 150 mounted on it. Like in the arrangement according to Figure 1, it is possible to use either only the spring 136 or only the ring 138 as locking means.

The method used for opening and closing the coupling as shown in Figures 3 and 4 is essentially the same as described above in connection with Figures 1 and 2, wherefore further description will be unnecessary.

It will be seen that the present invention is not limited to the embodiments described above and shown on the drawings but only by the definitions of the claims.

## Claims

1 A hose or pipe coupling comprising first and second coupling members (2, 4; 102, 104) which, when the coupling is connected, cooperate with one another and which in this position are held by a locking device (32; 132), characterized in that the locking device (32; 132) comprises at least two arms (34; 134) which are swingable at the first coupling member (2; 102) and which engage with the second coupling member (34; 134), the arms being provided with axially extending guide surfaces (44; 144), and further comprises locking means (36, 38; 136, 138) which can be acted upon for detachably maintaining the engagement, the locking means being slidable along the guide surfaces of the arms between a first position, in which it acts on the arms in order for them to engage with the second coupling member, and a second position, in which it acts on the arms in order for them to take the swinging position out of engagement with the second coupling member, so that this member can be parted from the first coupling member.

2 A coupling according to claim 1, characterized in that each of the guide surfaces (44; 144) formed on the outsides of the arms (34; 134) is axially defined by at least one shoulder (48; 148) which can be acted upon by the locking means (36, 38; 136, 138) and in that the point (A; B) round which the arm is swingable, is located mainly radially in line with the shoulder (48; 148) or between the shoulder and the parts of the arms (34; 134) engaging with the second coupling member (4; 104).

3 A coupling according to claim 1 or 2, characterized in that the locking means is a ring (38; 138).

4 A coupling according to claim 1 or 2, characterized in that the locking means is a helical spring (36; 136).

5 A coupling according to claim 2, characterized in that the locking means is a rigid ring (38; 138) and a spring (36; 136), the ring being provided with a portion acting on the spring for compressing the spring between this portion and the shoulder (48) formed on each arm (34) or a second shoulder (102a) formed on the first coupling member (102).

6 A coupling according to any of the preceding claims, characterized in that the arms (34; 134) are retained on the first coupling means (2) only by the locking means (36, 38; 136, 138).

7 A coupling according to any of the preceding claims, characterized in that each arm (34; 134) has a first part (40; 140) for engaging with the second coupling means (4; 104), and a second part (42; 142) inserted between two substantially radial shoulders (26, 28; 126, 128) on the first coupling means (2; 102), the second portion being retained radially between these shoulders by the locking means (36, 38; 136, 138).

8 A coupling according to claim 7, characterized in that an axial play (y) between a flange (16) on the second coupling member (4) and the first part (40) of the arm, the play being greater than the difference in distance (x) between said radial shoulders (26, 28) and the axial thickness of the second part (42) of the arm (34).

9 A coupling according to any of the preceding claims, characterized in that the arms (34; 134) are parts of a slotted sleeve surrounding the coupling member (2, 4; 102, 104).

Fig.1

Fig.2

Fig. 3

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | NO-B-157 432 (KONGSBERG OFFSHORE SYSTEMS A/S) <br> * Page 5, lines 12-22; figure 1 * | 1-3,6, 7,9 | F 16 L 37/12 |
| X | DE-A-2 033 809 (MATO CURT MATTHAEI GMBH & CO KG) <br> * Page 11, lines 9-21; figure 1 * | 1,3,6, 7,9 | |
| X | DE-A1-2 625 146 (A/S TEKNOVA) <br> * Page 5, lines 8-13; figures 1,2 * | 1-3,9 | |
| X | CH-A-407 677 (JOSEPH LUCAS LTD) <br> * Page 2, lines 22-37; figures 1,2 * | 1,3-7, 9 | |
| X | FR-A-847 163 (COMPAGNIE DU GAZ DE PARIS RÉGIE INTÉRESSÉE) <br> * Whole document * | 1-7,9 | TECHNICAL FIELDS SEARCHED (Int. Cl.4) |
| X | US-A-2 409 650 (EARL B. WIGGINS) <br> * Column 3, lines 22-32; figures 1-10 * | 1-6 | F 16 L |

The present search report has been drawn up for all claims

| Place of search | Date of completion of the search | Examiner |
|---|---|---|
| STOCKHOLM | 12-07-1989 | LINDHULT A. |